# EUROPÄISCHE PATENTANMELDUNG

(11) **EP 0 729 917 A1**
(43) Veröffentlichungstag der Anmeldung: **04.09.1996**
(21) Anmeldenummer: 95103135.0
(22) Anmeldetag: 04.03.1995
(51) Int. Cl.: C02F 3/30, C02F 1/44, C02F 1/52

(54) **Anwendung eines Verfahrens zur biologischen Denitrifikation von Wasser**

(71) Anmelder: WABAG Wassertechnische Anlagen GmbH, 95326 Kulmbach (DE)
(72) Erfinder: Speier, Martin, D-95326 Kulmbach (DE); Eicken, Walter, D-49497 Ibbenbüren (DE); Hagen, Klaus, Dr., D-95326 Kulmbach (DE); Sielhorst, Wilhelm, D-49716 Meppen-Hünten (DE); Weber, Hans-Joachim, D-49716 Meppen-Hünten (DE)
(74) Vertreter: Müller, Jürgen, Dipl.-Ing.

(57) **Zusammenfassung**

Bei der biologischen Denitrifizierung wird das Rohwasser mit einem Kohlenstoffdonator und mit Phosphat versetzt (13-15) und in einen anoxisch betriebenen, von Trägermaterial oder bewuchstragenden Einbauten freien Denitrifikationsreaktor (1) eingeleitet, in dem eine hohe Biomassekonzentration aufrechterhalten wird und dessen Inhalt ständig durchmischt wird. Ein Gemisch aus Wasser und Biomasse wird aus dem Denitrifikationsreaktor abgezogen und in Klarphase und Schlammphase getrennt. Der Schlamm wird teilweise in den Denitrifikationsreaktor zurückgeführt (21). Gemäß der Erfindung wird die biologische Denitrifikation auf Abwässer aus der Rauchgasentschwefelung und -entstickung angewandt. Dabei erfolgt die Zerlegung des Schlammes entweder ohne Zwischenbehandlung durch Mikrofiltration (24) oder in einem Plattenabscheider mit vorgeschaltetem Flockungsreaktor.

## Beschreibung

Die Erfindung betrifft die Anwendung eines im einleitenden Teil des Anspruchs 1 angegebenen Verfahrens.

Ein solches Verfahren ist aus der Veröffentlichung Korrespondenz Abwasser 35 (1988) Seiten 436 bis 438 bekannt. Das bekannte Verfahren wird zur biologischen Denitrifikation von stark nitrathaltigem Abwasser organischen Ursprungs, speziell von Pektinabwasser verwendet. Dieses Abwasser zeichnet sich durch einen hohen Gehalt an organischen Bestandteilen und einen Nitratgehalt von 1220 bis 2700 mg NO₃-N/l aus. Der in dem Denitrifikationsreaktor anfallende, im wesentlichen organische Schlamm wird ohne Zwischenbehandlung in einem Sedimentationsbehälter zerlegt. Derartige Sedimentationsbehälter lassen sich nur mit geringen hydraulischen Belastungen betreiben.

Das Buch "Nitratentfernung aus dem Trinkwasser" von W. Roennefahrt et al., aus der Reihe Kontakt und Studium, Band 399, Expert Verlag, enthält eine Übersicht über eine größere Anzahl von Verfahrensvarianten mit mikrobieller Nitratreduktion. Der Nitratabbau findet durchweg in einem Reaktionsraum mit Trägermaterial statt, auf dem Bakterien als Biofilm wachsen. Als Trägermaterialien werden zum Beispiel Aktivkohlekörner, Styroporkugeln und Blähtonkugeln genannt, die im Betrieb je nach Verfahrensvariante ein Festbett, eine Schwimmschicht oder ein Wirbelbett bilden. Die Bewuchsflächen können auch durch Einbauten wie z. B. getauchte Rotoren, gebildet werden. Gemäß dem Grundschema, das praktisch allen Verfahrensvarianten gemeinsam ist, erfolgt zwischen Nitratabbau und abschließender Klärung eine Belüftung bzw. Sauerstoffanreicherung.

Im Vergleich zu den Rohwässern, die für die Trinkwasserversorgung verwendet werden oder die organischen Ursprungs sind, sind die Abwässer der Rauchgasentschwefelung und -entstickung mit Nitratstickstoffkonzentrationen von 50 bis 400 mg NO₃-N/l belastet. Außerdem enthalten sie Salze, insbesondere Chloride (3 - 10 g/l), Sulfate (1 - 2 g/l) und Natriumionen, ferner Schwermetalle, wie Quecksilber, Cadmium, Kupfer, Nickel, Chrom und Zink, sowie suspendierte abfiltrierbare Stoffe, insbesondere Gips und Kalk. Man hat es bisher nicht für möglich gehalten, den Nitratgehalt in salzhaltigen und mit Schwermetallen belasteten Abwässern auf biologische Weise abbauen zu können.

Die EP-A1-0 255 745 weist schon darauf hin, daß anaerobe Stoffwechselvorgänge in stark salzhaltigen Abwässern zum Erliegen kommen oder weitgehend unterdrückt werden. Sie beschreibt ein Verfahren zum biologischen Behandeln von Abwasser aus einer Rauchgasentschwefelungsanlage. Das Abwasser enthält 10 bis 100 g/l Salze, 0,1 bis 10 g/l organische Verbindungen und 100 bis 2000 ppm wasserlösliche Stickstoff-Sauerstoffverbindungen. Es wird durch ein unter Luftabschluß gehaltenes Festbett oder Wirbelbett aus körnigem Trägermaterial geleitet, das mit Faulschlammbakterien imprägniert ist. Im behandelten Wasser sind Nitrit und Nitrat nicht nachzuweisen, der Gehalt an organischen Substanzen ist reduziert und der Schwermetallgehalt liegt unter den behördlich zugelassenen Grenzwerten.

Der Erfindung liegt die Aufgabe zugrunde, bei der Anwendung gemäß dem einleitenden Teil des Anspruchs 1 mit möglichst einfachen Mitteln den Nitratgehalt abzubauen und den dabei anfallenden Schlamm abzutrennen.

Diese Aufgabe wird durch die kennzeichnenden Merkmale der Ansprüche 1 und 2 gelöst. Auf diese Weise gelingt es, den Nitratgehalt aus dem Abwasser einer kombinierten Rauchgasentschwefelungs- und entstickungsanlage weitgehend abzubauen, wobei ein Schlamm anfällt, der zu 40% aus organischen Bestandteilen aus der biologischen Reinigung und zu 60% aus anorganischen Bestandteilen des Abwassers besteht. Auf diese besondere Schlammzusammensetzung ist das nachgeschaltete Verfahren zur Zerlegung des Schlammes abgestimmt. Dabei liefert das Mikrofilter eine sehr saubere Klarphase, während der Plattenabscheider mit vorgeschalteter Flockung eine hohe Durchsatzleistung sicherstellt.

Die Ansprüche 3 bis 9 enthalten weitere vorteilhafte Merkmale der Erfindung.

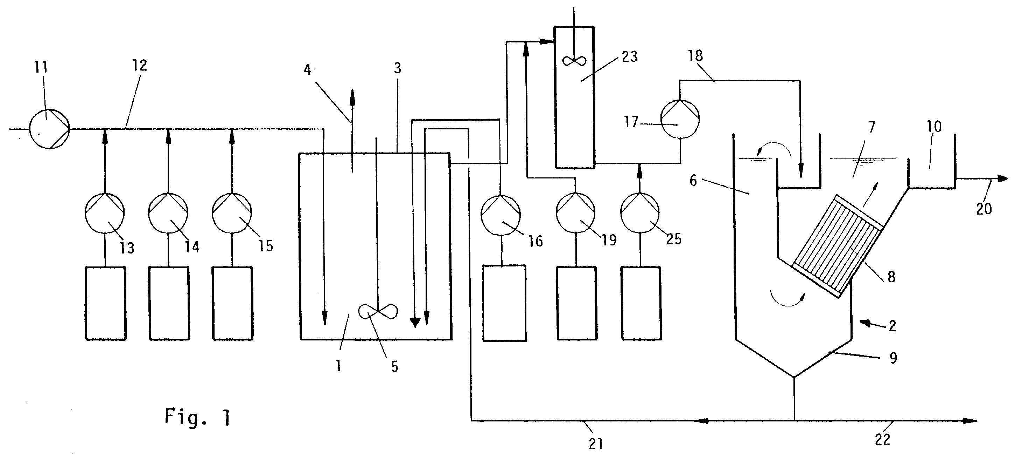

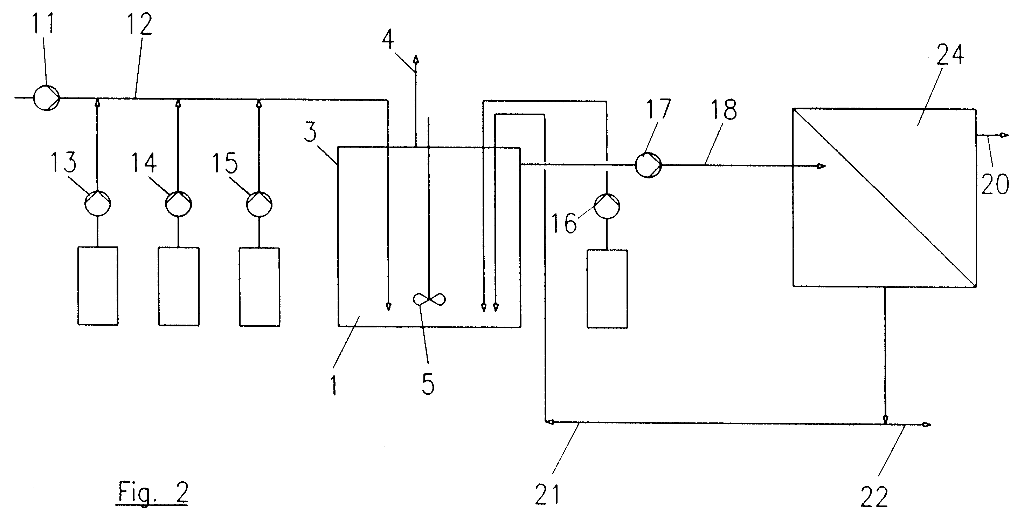

Die Zeichnung dient zur Erläuterung der Erfindung anhand von zwei verschiedenen, in den Figuren 1 und 2 schematisch dargestellten Anlagen zum Denitrifizieren von Abwässern aus der Rauchgasentschwefelung und -entstickung.

Die Anlage gemäß Figur 1 umfaßt einen Denitrifikationsreaktor 1 und einen Plattenabscheider 2.

Der Denitrifikationsreaktor 1 ist als zylindrisches Becken ausgebildet. Er kann mit einer Abdeckung 3 versehen werden, von der ein Abgasrohr 4 ausgeht. In dem Becken ist eine Mischeinrichtung, hier beispielhaft als Rührer 5 dargestellt, angeordnet. Der Denitrifikationsreaktor 1 ist so dimensioniert, daß sich eine Raumbelastung zwischen 0,4 und 4,6 kg NO₃-N/m^{3·}d ergibt. Er kann mit nicht dargestellten Wärmetauschern ausgestattet werden und an eine Warm- oder Kaltwasserleitung angeschlossen werden. Die Temperatur im Innern des Denitrifikationsreaktors 1 ist durch Zufuhr von Wärme oder durch Warm- oder Kaltwasser auf einen vorgegebenen Wert einregelbar oder wird durch die Temperatur des Abwassers bestimmt. Der Denitrifikationsreaktor 1 enthält kein Trägermaterial in körniger oder sonstiger Form und auch keinerlei bewuchstragende Einbauten.

Der Plattenabscheider 2 weist ein Gehäuse mit einem Einlaufteil 6 und einem Auslaufteil 7 auf, die durch eine Zwischenwand und ein Paket aus parallelen, schräg nach oben unter einen Winkel von 45 bis 60° gerichteten Platten 8 voneinander getrennt sind. Der Einlaufteil 6 hat unterhalb des Plattenpaketes einen als Schlammtrichter 9 ausgebildeten Boden. Im oberen Teil des Auslaufteiles 7 befindet sich eine mit einem Überlaufwehr versehene Ablaufrinne 10.

Dem Denitrifikationsreaktor 1 wird Abwasser einer Rauchgasentschwefelungs- und entstickungsanlage mit einer Pumpe 11 über eine Leitung 12 zugeführt, deren Mündung in der Nähe des Bodens angeordnet ist. In das zufließende Abwasser werden mit Pumpen 13, 14, 15 Zusatzstoffe eindosiert, und zwar ein Kohlenstoffdonator, wie zum Beispiel Isopropanol in einer solchen Menge, daß sich ein Molverhältnis C _{verfügbar} :N von 1,4 bis 2,0 ergibt, Phosphorsäure und gegebenenfalls Nitrat zur Aufrechterhaltung einer vorgegebenen Nitratkonzentration. Mit einer weiteren Pumpe 16 kann eine Säure, vorzugsweise Salzsäure, oder eine Lauge, vorzugsweise Natronlauge zugegeben werden, um den p_{H}-Wert zwischen 6,9 und 7,2 zu halten.

Der Inhalt des Denitrifikationsreaktors 1 wird konstant gehalten durch eine niveaugeregelte Pumpe 17, die über eine vom oberen Bereich des Denitrifikationsreaktors 1 ausgehende Leitung 18 Flüssigkeit durch einen Flockungsreaktor 23 saugt und in den Einlaufteils 6 des Plattenabscheiders 2 einspeist. Mit einer Pumpe 19 wird zur Verbesserung der Absetzeigenschaften ein Flockungsmittel z. B. Eisen-III-chlorid zugesetzt. Nach Passage des Flockungsreaktors 23 kann gegebenenfalls mittels einer Pumpe 25 ein Flockungshilfsmittel zugegeben werden.

Aus dem Plattenabscheider 2 läuft Klarphase über die Ablaufrinne 10 und die Leitung 20 ab. Der Schlamm wird zwischen den Platten 8 abgeschieden und sammelt sich in dem Schlammtrichter 9 an, aus dem er abgezogen und teilweise über Leitung 21 in den Denitrifikationsreaktor 1 zurückgeführt wird. Überschußschlamm wird über die Abzweigleitung 22 abgezogen.

Das Volumenverhältnis zwischen rückgeführtem Schlamm und Zulaufwassermenge liegt zwischen 1:1 bis 3:1. Auf diese Weise wird in dem Denitrifikationsreaktor ein Trockensubstanzgehalt von etwa 5 bis 10 g/l aufrecht erhalten. Erfahrungsgemäß kommt es bei einem Trockensubstanzgehalt unter 5 g/l zu einer Verringerung der biologischen Aktivität. Wenn der Trockensubstanzgehalt 10 g/l deutlich überschreitet, kann sich die Schlammzusammensetzung so verändern (Erhöhung des anorganischen Anteils), daß der Prozeß instabil wird. Das Gemisch aus zugeführtem Abwasser und rückgeführtem Schlamm wird in dem Denitrifikationsreaktor 1 unter anoxischen Bedingungen ständig durchmischt.

Die Anlage gemäß Figur 2 unterscheidet sich von der oben beschriebenen Anlage im wesentlichen dadurch, daß der Plattenabscheider 2 durch ein mit Membranmodulen ausgestattetes Mikrofilter 24 ersetzt ist. Ein weiterer Unterschied besteht darin, daß eine Zudosierung von Flockungsmittel und Flockungshilfsmittel nicht vorgesehen ist. Konzentrat und Spülwasser gelangen teilweise als Rückführschlamm über die Leitung 21 zurück in den Denitrifikationsreaktor 1. Der Rest wird als Überschußschlamm über die Abzweigleitung 22 abgezogen. Das Permeat fließt über Leitung 20 ab.

Gemäß der Erfindung liegt bei einer durchschnittlichen Verweilzeit von ungefähr 3 h und Rohwasserkonzentrationen von 50 - 400 mg NO₃-N/ l der Wirkungsgrad bei ≧ 95 Prozent. Dies gilt beispielsweise für Abwässer, die bei der Rauchgasentschwefelung und -entstickung anfallen.

## Patentansprüche

1. Anwendung eines Verfahrens zur biologischen Denitrifikation von Wasser, bei dem das zu denitrifizierende Wasser mit einem Kohlenstoffdonator, mit Phosphat und gegebenenfalls weiteren Zusatzstoffen versetzt und in einen anoxisch betriebenen, von Trägermaterial und bewuchstragenden Einbauten freien Denitrifikationsreaktor eingeleitet wird, in dem eine hohe Biomassekonzentration aufrecht erhalten wird, und dessen Inhalt ständig durchmischt wird, bei dem ein Wasser und Biomasse enthaltendes Gemisch aus dem Denitrifikationsreaktor abgezogen und ohne Zwischenbehandlung in eine Klarphase und eine Schlammphase zerlegt wird und bei dem die Klarphase zumindest teilweise abfließt, ein Teil des Schlammes in den Denitrifikationsreaktor zurückgeführt und der Rest als Überschußschlamm abgezogen wird, auf die Denitrifikation von industriellen Abwässern, insbesondere Abwässern von Rauchgasentschwefelungs- und -entstickungsanlagen, wobei die Zerlegung in Klarphase und Schlammphase durch Mikrofiltration erfolgt und das bei der Reinigung des Mikrofilters anfallende Spülwasser in den Denitrifikationsreaktor zurückgeführt wird.

2. Anwendung eines Verfahrens zur biologischen Denitrifikation von Wasser, bei dem das zu denitrifizierende Wasser mit einem Kohlenstoffdonator, mit Phosphat und gegebenenfalls weiteren Zusatzstoffen versetzt und in einen anoxisch betriebenen, von Trägermaterial und bewuchstragenden Einbauten freien Denitrifikationsreaktor eingeleitet wird, in dem eine hohe Biomassekonzentration aufrecht erhalten wird, und dessen Inhalt ständig durchmischt wird, bei dem ein Wasser und Biomasse enthaltendes Gemisch aus dem Denitrifikationsreaktor abgezogen und in eine Klarphase und eine Schlammphase zerlegt wird und bei dem die Klarphase abfließt, ein Teil des Schlammes in den Denitrifikationsreaktor zurückgeführt und der Rest als Überschußschlamm abgezogen wird, auf die Denitrifikation von industriellen Abwässern, insbesondere Abwässern von Rauchgasentschwefelungs- und -entstickungsanlagen, wobei die Zerlegung in Klarphase und Schlammphase in einem Plattenabscheider mit einem vorgeschalteten Flockungsreaktor erfolgt und dem Gemisch vor Eintritt in den Plattenabscheider ein Flockungshilfsmittel zugesetzt wird.

3. Anwendung nach Ansprüche 1 oder 2, dadurch gekennzeichnet, daß der Kohlenstoffdonator zur Einstellung eines Molverhältnisses C _{verfügbar} :N zwischen 1,4 und 2,0 dosiert wird.

4. Anwendung nach einem der Ansprüche 1 bis 3, dadurch gekennzeichnet, daß in dem Denitrifikationsreaktor eine Raumbelastung von 0,4 bis 4,6 kgNO₃ - N/m^{3·}d eingehalten wird.

5. Anwendung nach einem der Ansprüche 1 bis 4, dadurch gekennzeichnet, daß in dem Denitrifikationsreaktor ein Trockensubstanzgehalt von 5 bis 10 g/l eingehalten wird.

6. Anwendung nach einem der Ansprüche 1 bis 5, dadurch gekennzeichnet, daß durch geregelte HCl- oder NaOH-Zugabe in dem Denitrifikationsreaktor ein p_{H}-Wert zwischen 6,9 und 7,2 eingehalten wird.

7. Anwendung nach einem der Ansprüche 1 bis 9, dadurch gekennzeichnet, daß durch Heizung oder Zufuhr von kaltem oder warmem Wasser oder durch Zufuhr von Abwasser gegebener Temperatur die Temperatur in dem Denitrifikationsreaktor auf etwa 30 - 35°C gehalten wird.

8. Anwendung nach einem der Ansprüche 1 bis 7, dadurch gekennzeichnet, daß das Volumenverhältnis zwischen dem zurückgeführten Schlamm und dem zulaufenden Wasser zwischen 1:1 und 3:1 liegt.

9. Anwendung nach einem der Ansprüche 1 bis 8, dadurch gekennzeichnet, daß dem zulaufenden Abwasser zur Aufrechterhaltung einer vorgegebenen Nitratkonzentration Nitrat zugesetzt wird.
